# EUROPEAN PATENT APPLICATION

(11) **EP 4 576 727 A2**
(43) Date of publication of application: **25.06.2025**
(21) Application number: 25174879.4
(22) Date of filing: 29.09.2020
(51) Int. Cl.: H04L 47/78

(54) **RANDOM ACCESS METHOD AND DEVICE, TERMINAL, AND STORAGE MEDIUM**

(62) Divisional of application: 20955544.0
(71) Applicant: GUANGDONG OPPO MOBILE TELECOMMUNICATIONS CORP., LTD., Dongguan, Guangdong 523860 (CN)
(72) Inventor: FU, Zhe, Guangdong, 523860 (CN); WANG, Shukun, Guangdong, 523860 (CN)
(74) Representative: Aldridge, Henry Alexander

(57) **Abstract**

Methods and apparatuses for random access (RA), a terminal device, and a storage medium are provided in the disclosure. The method is applied to the terminal device and includes the following. Perform an RA procedure by using an RA-prioritization for slicing on condition that a use condition is satisfied. In implementations of the disclosure, the RA-prioritization for slicing is introduced, and the terminal device can perform the RA procedure by using the RA-prioritization for slicing on condition that the use condition is satisfied, thereby specifying a behavior of the terminal device, and ensuring that terminal devices supporting different slices have different priorities to access a target network device or a network.

## Description

### TECHNICAL FIELD

This disclosure relates to the field of wireless communication, and more particularly to methods and apparatuses for random access (RA), a terminal device, and a storage medium.

### BACKGROUND

A new radio (NR) system supports to configure random access-prioritizations (RA-prioritizations) for terminal devices. The RA-prioritization is a parameter that the terminal device needs to use in an RA procedure.

In the related art, there are multiple types of RA-prioritizations that include an RA-prioritization for a beam failure recovery (BFR) procedure, an RA-prioritization for a multimedia priority service (MPS)/mission critical service (MCS) terminal device, and an RA-prioritization for a handover procedure.

### SUMMARY

Methods and apparatuses for random access (RA), a terminal device, and a storage medium are provided in implementations of the disclosure, where the terminal device can perform an RA procedure by using an RA-prioritization for slicing, thereby specifying a behavior of the terminal device. The technical solutions are the following.

According to an aspect of the disclosure, a method for RA is provided. The method is applied to a terminal device and includes the following. Perform an RA procedure by using an RA-prioritization for slicing on condition that a use condition is satisfied.

According to an aspect of the disclosure, a method for RA is provided. The method is applied to a terminal device and includes the following. On condition that the terminal device is configured with multiple sets of RA-prioritizations, perform an RA procedure by selecting a set of RA-prioritizations according to a first rule. The multiple sets of RA-prioritizations include at least one of: an RA-prioritization for a handover procedure, an RA-prioritization for a beam failure recovery (BFR) procedure, an RA-prioritization for a specific-type terminal device, or an RA-prioritization for slicing.

According to an aspect of the disclosure, an apparatus for RA is provided. The apparatus includes an RA performing module. The RA performing module is configured to perform an RA procedure by using an RA-prioritization for slicing on condition that a use condition is satisfied.

According to an aspect of the disclosure, an apparatus for RA is provided. The apparatus includes an RA performing module. The RA performing module is configured to perform an RA procedure by selecting a set of RA-prioritizations according to a first rule on condition that the terminal device is configured with multiple sets of RA-prioritizations. The multiple sets of RA-prioritizations include at least one of: an RA-prioritization for a handover procedure, an RA-prioritization for a BFR procedure, an RA-prioritization for a specific-type terminal device, or an RA-prioritization for slicing.

According to an aspect of the disclosure, a terminal device is provided. The terminal device includes a processor, a transceiver coupled with the processor, and a memory configured to store executable instructions for the processor, where the processor is configured to load and execute the executable instructions to implement the methods for RA in the above aspects.

According to an aspect of the disclosure, a computer-readable storage medium is provided. The computer-readable storage medium is configured to store executable instructions which are loaded and executed by a processor to implement the methods for RA in the above aspects.

According to an aspect of the disclosure, a computer program product or a computer program is provided. The computer program product or the computer program includes a computer instruction stored in a computer-readable storage medium. A processor of a computer device is configured to read the computer instruction from the computer-readable storage medium and then execute the computer instruction to enable the computer device to perform the methods for RA in the above aspects.

The technical solutions provided in implementations of the disclosure include at least the following beneficial effects. The RA-prioritization for slicing is introduced, and the terminal device can perform the RA procedure by using the RA-prioritization for slicing on condition that the use condition is satisfied, thereby specifying a behavior of the terminal device, and ensuring that terminal devices supporting different slices have different priorities to access a target network device or a network.

### BRIEF DESCRIPTION OF THE DRAWINGS

In order to describe technical solutions in implementations of the disclosure more clearly, the following will give a brief introduction to accompanying drawings required for describing implementations. Apparently, the accompanying drawings hereinafter described merely illustrate some implementations of the disclosure. Based on these drawings, those of ordinary skills in the art can also obtain other drawings without creative effort.
FIG. 1 is a schematic diagram illustrating a random access (RA) procedure provided in an exemplary implementation of the disclosure.
FIG. 2 is a schematic diagram illustrating an RA procedure provided in an exemplary implementation of the disclosure.
FIG. 3 is a block diagram illustrating a communication system provided in an exemplary implementation of the disclosure.
FIG. 4 is a flow chart illustrating a method for RA provided in an exemplary implementation of the disclosure.
FIG. 5 is a flow chart illustrating a method for RA provided in an exemplary implementation of the disclosure.
FIG. 6 is a flow chart illustrating a method for RA provided in an exemplary implementation of the disclosure.
FIG. 7 is a flow chart illustrating a method for RA provided in an exemplary implementation of the disclosure.
FIG. 8 is a flow chart illustrating a method for RA provided in an exemplary implementation of the disclosure.
FIG. 9 is a flow chart illustrating a method for RA provided in an exemplary implementation of the disclosure.
FIG. 10 is a flow chart illustrating a method for RA provided in an exemplary implementation of the disclosure.
FIG. 11 is a flow chart illustrating a method for RA provided in an exemplary implementation of the disclosure.
FIG. 12 is a flow chart illustrating a method for RA provided in an exemplary implementation of the disclosure.
FIG. 13 is a structural block diagram illustrating an apparatus for RA provided in an exemplary implementation of the disclosure.
FIG. 14 is a structural block diagram illustrating an apparatus for RA provided in an exemplary implementation of the disclosure.
FIG. 15 is a schematic structural diagram illustrating a communication device provided in an exemplary implementation of the disclosure.

### DETAILED DESCRIPTION

In order to make purposes, technical solutions, and advantages of the disclosure clearer, the following will further describe in detail implementations of the disclosure with reference to accompanying drawings.

First of all, briefly introduce terms involved in implementations of the disclosure.

Random access (RA) procedure

The RA procedure refers to a procedure from a time when a terminal device performs preamble transmission to start trying to access a network until a basic signaling connection is established with the network. The RA procedure is for establishing data communication between a terminal device and a network side.

The RA procedure is mainly triggered by the following: initial access from radio resource control (RRC) idle (RRC_IDLE); RRC connection re-establishment procedure; handover; downlink (DL) or uplink (UL) data arrival during RRC connected (RRC_CONNECTED) when UL synchronization status is "non-synchronised"; UL data arrival during RRC_CONNECTED when there are no available physical uplink control channel (PUCCH) resources for scheduling request (SR); SR failure; request by RRC upon synchronous reconfiguration; transition from RRC inactive (RRC_INACTIVE); to establish time alignment at secondary cell (SCell) addition; request for other system information (SI) (see subclause 7.3); or beam failure recovery (BFR).

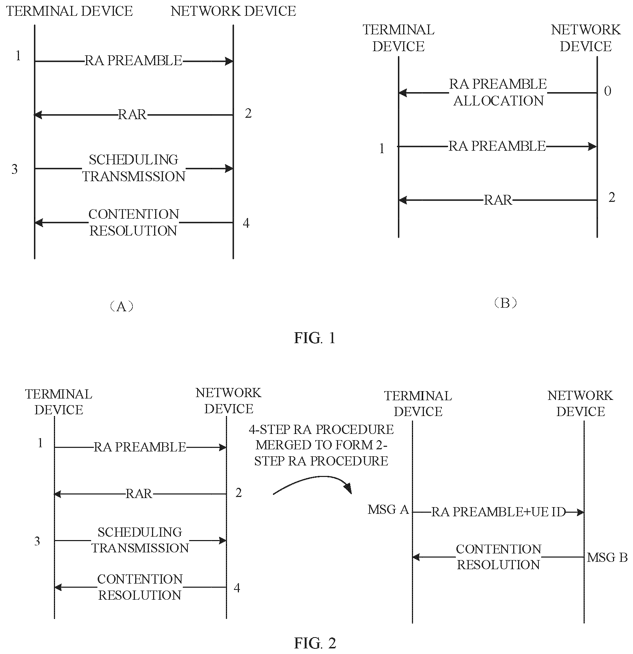

With reference to FIG. 1, in new radio (NR), two RA procedures are mainly supported, i.e., a contention-based RA procedure and a contention-free RA procedure.

As illustrated in (a) in FIG. 1, the contention-based RA procedure mainly includes four steps as follows.

Step 1, a terminal device transmits to a network device message 1 (msg 1), i.e., an RA preamble.

The terminal device transmits a preamble selected on a physical random access channel (PRACH) time-frequency resource selected. The network device can estimate, according to the preamble, UL timing and a size of a grant needed for transmission of msg 3 performed by the terminal device.

Step 2, the network device transmits to the terminal device msg 2, i.e., a random access response (RAR).

The terminal device activates an RAR window in response to transmission of the msg 1, and monitors within the RAR window a physical downlink control channel (PDCCH). The PDCCH is scrambled by a random access radio network temporary identifier (RA-RNTI).

The terminal device can obtain a physical downlink shared channel (PDSCH) scheduled by the PDCCH upon that the PDCCH scrambled by the RA-RNTI is successfully monitored, where the PDSCH contains an RAR.

The RAR may contain: a backoff indicator (BI) indicating a backoff time of retransmission of the msg 1, a random access preamble identifier (RAPID) indicating a preamble, a timing advance group (TAG) for adjusting UL timing, a UL grant indicating a UL resource for scheduling the msg 3, and a temporary cell-radio network temporary identifier (C-RNTI) for scrambling a PDCCH for msg 4 (at initial access).

Step 3, the terminal device transmits to the network device the msg 3, i.e., scheduling transmission.

The msg 3 is mainly used to inform the network device of a type of an event that triggers the RA procedure.

Exemplarily, a user equipment (UE) identifier (ID) and an establishment cause may be carried in the msg 3 if the event is an initial RA procedure, or a connected-UE ID and an establishment cause may be carried in the msg 3 if the event is an RRC re-establishment.

Step 4, the network device transmits to the terminal device the msg 4, i.e., a contention resolution message.

The msg 4 is for contention resolution.

As illustrated in (b) in FIG. 1, the contention-free RA procedure mainly includes three steps as follows.

Step 0, the network device transmits to the terminal device msg 0, i.e., RA preamble allocation.

The network device allocates to the terminal device a dedicated RA preamble.

Step 1, the terminal device transmits to the network device msg 1, i.e., an RA preamble.

Step 2, the network device transmits to the terminal device msg 2, i.e., an RAR.

In the contention-based RA procedure, steps in the 4-step RA procedure may be merged to form a 2-step RA procedure. With reference to FIG. 2, the 2-step RA procedure obtained after merging includes msg A and msg B, and related steps of the 2-step RA procedure are as follows.

Step 1, the terminal device transmits the msg A to the network device.

Step 2, the network device transmits the msg B to the terminal device in response to reception of the msg A transmitted by the terminal device.

Optionally, the msg A includes the content of the msg 1 and the content of the msg 3. That is, the msg A includes a preamble and a UE ID, where the UE ID may be one of a C-RNTI, a temporary C-RNTI, an RA-RNTI, and a non-access stratum (NAS) UE ID.

Optionally, the msg B includes the content of the msg 2 and the content of the msg 4. That is, the msg B includes an RAR and a contention resolution message.

### RA-prioritization

The RA-prioritization is a parameter that the terminal device needs to use in the RA procedure, and indicates different RA priorities. The RA-prioritization may include a scaling factor for a BI, where the scaling factor for the BI is used to select a time for preamble retransmission, and a power ramping step for determining a power for preamble retransmission, referring to Table 1.

**Table 1**

| |
|---|
| RA-prioritization field descriptions |
| powerRampingStepHighPrioritiy |
| Power ramping step applied for prioritized random access procedure. |
| scalingFactorBI |
| Scaling factor for the BI for the prioritized random access procedure. (see TS 38.321 [3], clause 5.1.4). Value zero corresponds to 0, value dot 25 corresponds to 0.25 and so on. |

In release-15 (Rel-15), a dedicated RA-prioritization for BFR is introduced for fast BFR. Specific parameters are included in BeamFailureRecoveryConfig.

In release-16 (Rel-16), a dedicated RA-prioritization for a multimedia priority service (MPS)/mission critical service (MCS) terminal device (an access identity=1 or 2) is introduced to enable the higher-priority terminal devices to realize fast access. Specific parameters are included in RACH-ConfigCommon. The specific parameters are included in ra-PrioritizationForAccessIdentity in the RACH-ConfigCommon.

In addition, there also is an RA-prioritization for a handover procedure, which is used by the terminal device to perform handover to realize fast access to a target cell. Specific parameters are included in RACH-ConfigDedicated.

In Rel-16, for the 2-step RA procedure, for each of the above three conditions, there also is a corresponding RA-prioritization. A specific parameter is ra-PrioritizationTwoStep-r16.

In the related art, there are multiple sets of RA-prioritizations that include the RA-prioritization for the BFR procedure, the RA-prioritization for the MPS/MCS terminal device, and the RA-prioritization for the handover procedure mentioned above.

However, in slicing technology in release-17 (Rel-17), an RA-prioritization for slicing may be introduced. In the related art, when the terminal device receives multiple RA-prioritizations, for these cases, for example, how to use the RA-prioritizations, which set of RA-prioritizations in the multiple RA-prioritizations is prioritized for use, or which set of RA-prioritizations in the multiple RA-prioritizations is used under which condition, no reasonable solution is proposed at present.

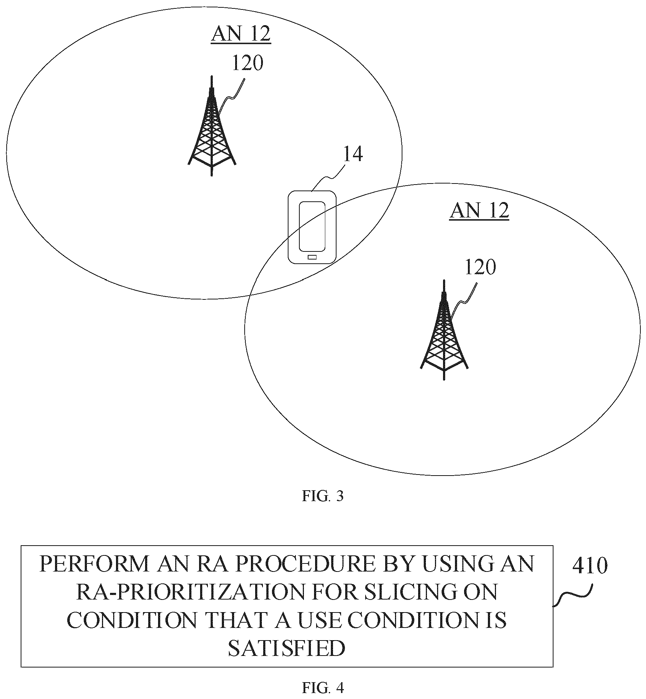

FIG. 3 is a block diagram illustrating a communication system provided in an exemplary implementation of the disclosure. The communication system may include an access network (AN) 12 and a terminal device 14.

The AN 12 includes multiple network devices 120. The network device 120 may be a base station, where the base station is an apparatus that is deployed in the AN and used to provide a wireless communication function for the terminal device. The base station may include various forms of macro base stations, micro base stations, relay stations, access points (AP), etc. In systems with different radio access technologies, devices with a base-station function may have different names, for example, eNodeB (eNB) in a long-term evolution (LTE) system, or a gNodeB (gNB) in a fifth generation (5G) NR-based access to unlicensed spectrum (NR-U) system. With evolution of communication technology, description of "base station" may be changed. For sake of convenience in implementations of the disclosure, the above apparatuses for providing wireless communication functions for the terminal device 14 are collectively referred to as network devices.

The terminal device 14 may include various devices with a wireless communication function such as handheld devices, in-vehicle devices, wearable devices, and computing devices, or other processing devices coupled with a wireless modem, as well as various forms of UEs, mobile stations (MSs), terminal devices, and the like. For convenience of illustration, the above-mentioned devices are collectively referred to as terminal devices. The network device 120 communicates with the terminal device 14 through a certain air-interface technology, such as a Uu interface.

Technical solutions in implementations of the disclosure can be applicable to various communication systems, for example, a global system of mobile communication (GSM), a code division multiple access (CDMA) system, a wideband code division multiple access (WCDMA) system, a general packet radio service (GPRS), an LTE system, an LTE frequency division duplex (FDD) system, an LTE time division duplex (TDD) system, an advanced LTE (LTE-A) system, an NR system, an evolved system of the NR system, an LTE-based access to unlicensed spectrum (LTE-U) system, an NR-U system, a universal mobile telecommunication system (UMTS), a worldwide interoperability for microwave access (WiMAX) communication system, a wireless local area network (WLAN), a wireless fidelity (WiFi), a next-generation communication system, or other communication systems.

Generally speaking, a conventional communication system supports a limited number of connections and therefore is easy to implement. However, with development of communication technology, a mobile communication system not only supports conventional communication but also supports, for example, device to device (D2D) communication, machine to machine (M2M) communication, machine type communication (MTC), vehicle to vehicle (V2V) communication, and a vehicle to everything (V2X) system. Implementations of the disclosure can also be applicable to these communication systems.

FIG. 4 is a flow chart illustrating a method for RA provided in an exemplary implementation of the disclosure. The method may be applied to the terminal device illustrated in FIG. 3 and includes the following.

At 410, perform an RA procedure by using an RA-prioritization for slicing on condition that a use condition is satisfied.

The RA-prioritization is a parameter that the terminal device needs to use in the RA procedure, and indicates different RA priorities.

In implementations of the disclosure, the RA-prioritization for slicing is introduced. Exemplarily, slice *a* corresponds to RA-prioritization *a,* and slice *b* corresponds to RA-prioritization b. Different slices may correspond to a same RA-prioritization or may correspond to different RA-prioritizations, which are not limited herein.

Optionally, the RA-prioritization includes at least one of a power ramping step (powerRampingStepHighPrioritiy) or a scaling factor for a BI (scalingFactorBI), where the power ramping step is used to determine a power for preamble retransmission, and the scaling factor for the BI is used to select a time for preamble retransmission.

The use condition supports the terminal device to use the RA-prioritization for slicing. The use condition will be further illustrated in the following implementations.

Optionally, the RA procedure may be triggered by different events that include, but are not limited to, initial access from RRC_IDLE; RRC connection re-establishment procedure; handover; DL or UL data arrival during RRC_CONNECTED when UL synchronization status is "non-synchronised"; UL data arrival during RRC_CONNECTED when there are no available PUCCH resources for SR; SR failure; request by RRC upon synchronous reconfiguration; transition from RRC_INACTIVE; to establish time alignment at SCell addition; request for other SI; or BFR. In RA procedures triggered by the above events, an RA procedure triggered by at least one event satisfies the use condition.

Optionally, the RA procedure includes, but is not limited to, a 4-step RA procedure and a 2-step RA procedure. With evolution of communication technology, RA procedures in other forms may appear, which are not limited in implementations of the disclosure.

To sum up, according to the method provided in the implementation, the RA-prioritization for slicing is introduced, and the terminal device can perform the RA procedure by using the RA-prioritization for slicing on condition that the use condition is satisfied, thereby specifying a behavior of the terminal device, and thus ensuring that terminal devices supporting different slices have different priorities to access a target network device or a network.

In an optional implementation based on FIG. 4, the use condition includes at least one of the following.

First, the terminal device is in a handover procedure.

The handover procedure refers to a procedure in which the terminal device performs handover to access a target cell from access of a source cell.

Second, the terminal device is in a BFR procedure.

The BFR procedure refers to a procedure in which the terminal device handles beam failure. Optionally, the BFR procedure includes beam failure detection, candidate beam identification, and beam failure recovery request (BFRQ) transmission.

Third, the terminal device belongs to a specific-type terminal device.

Optionally, the specific-type terminal device includes, but is not limited to, at least one of an MPS terminal device or an MCS terminal device.

The following will exemplarily illustrate the above three use conditions, respectively.

First, the terminal device is in the handover procedure.
1) The terminal device performs the RA procedure by prioritizing use of the RA-prioritization for slicing.

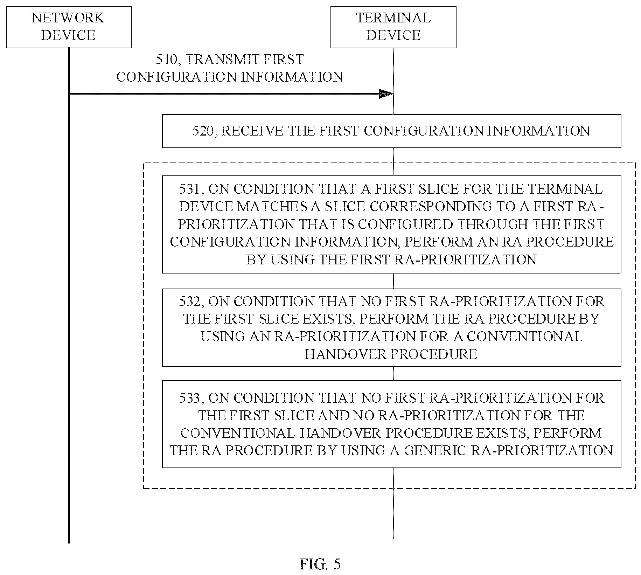

In an optional implementation based on FIG. 4, FIG. 5 is a flow chart illustrating a method for RA provided in an exemplary implementation of the disclosure. The method may be applied to the terminal device and the network device illustrated in FIG. 3. In the implementation, the method includes the following.

At 510, the network device transmits first configuration information.

The first configuration information is used to configure an RA-prioritization for slicing. Multiple RA-prioritizations for slicing or only one RA-prioritization for slicing can be configured through the first configuration information, which is not limited in implementations of the disclosure.

Optionally, a use granularity of the RA-prioritization for slicing includes: a single slice, a slice group including at least two slices, all slices, a single slice group, at least two slice groups, or all slice groups. The slice group is a group formed by classifying slices, and one slice group includes at least one slice.

Optionally, the first configuration information is carried in at least one of SI or an RRC dedicated message. The RRC dedicated message includes, but is not limited to, a bandwidth part uplink dedicated message (BWP-Uplink Dedicated), a BWP-Uplink common, RACH-ConfigDedicated, an RRC reconfiguration message, or an RRC release message. Optionally, the RRC reconfiguration message includes a handover command in a handover procedure.

Optionally, the first configuration information further includes an RA-prioritization for a handover procedure.

Optionally, the RA-prioritization includes at least one of a power ramping step or a scaling factor for a BI, where the power ramping step is used to determine a power for preamble retransmission, and the scaling factor for the BI is used to select a time for preamble retransmission.

In an implementation, the first configuration information can directly indicate a value of an RA-prioritization. Exemplarily, for slice A or slice group A, the first configuration information indicates power ramping step_A and scaling factor for a BI_A; or for slice B or slice group B, the first configuration information indicates power ramping step_B and scaling factor for a BI_B.

In another implementation, the first configuration information indicates powerRampingStepHighPriority, scalingFactorBI, and adjustment factor K or adjustment value M.

Exemplarily, for slice A or slice group A, the first configuration information indicates that power ramping step_A is powerRampingStepHighPriority ** K₁* or powerRampingStepHighPriority *+ M₁,* and scaling factor for a BI_A is scalingFactorBI * *K₂* or scalingFactorBI *+ M₂.*

At 520, the terminal device receives the first configuration information.

The first configuration information is used to configure the RA-prioritization for slicing. Optionally, the first configuration information further includes the RA-prioritization for the handover procedure.

At 531, on condition that a first slice for the terminal device matches a slice corresponding to a first RA-prioritization that is configured through the first configuration information, the terminal device performs an RA procedure by using the first RA-prioritization.

The first slice is a slice selected by the terminal device, a slice the terminal device is interested in, or a slice with a highest priority for the terminal device. On condition that the first RA-prioritization for the first slice is configured through the first configuration information, the terminal device performs the RA procedure by using the first RA-prioritization.

Optionally, the first slice is a slice for a service of the terminal device, where the service includes, but is not limited to, at least one of: a currently established service, a current serving service, or a service to-be-required by the terminal device. The service to-be-required by the terminal device refers to a service required by the terminal device within a period of time of a predetermined duration, where the start time of the period of time is the current time. Optionally, an access stratum (AS) of the terminal device obtains a correspondence between services and slices from an NAS of the terminal device. Optionally, if there are multiple types of services, the terminal device can select a service the terminal device is most interested in or a service with a highest priority for the terminal device.

Optionally, the first slice is pre-configured or indicated to the terminal device by the network device.

In an implementation, RA-prioritizations for at least two slices are configured through the first configuration information, and the operation at 531 includes the following. On condition that the RA-prioritizations for the at least two slices are configured through the first configuration information, determine the first RA-prioritization for the first slice from the RA-prioritizations for the at least two slices according to the first slice, and perform the RA procedure by using the first RA-prioritization. Exemplarily, as illustrated in Table 2, the first RA-prioritization for the first slice, a second RA-prioritization for a second slice, and a third RA-prioritization for a third slice are configured through the first configuration information configured by the network device. The terminal device determines that the slice for the service is the first slice or determines the first slice according to pre-configuration, or the network device indicates the first slice to the terminal device. The terminal device determines the first RA-prioritization for the first slice from the three RA-prioritizations configured through the first configuration information and performs the RA procedure by using the first RA-prioritization.

**Table 2: First configuration information**

| Slice | RA-prioritization |
|---|---|
| first slice | first RA-prioritization |
| second slice | second RA-prioritization |
| third slice | third RA-prioritization |

In another implementation, the first RA-prioritization for the first slice is configured through the first configuration information, and the operation at 531 includes the following. On condition that the first RA-prioritization for the first slice is configured through the first configuration information, perform the RA procedure by using the first RA-prioritization.

Exemplarily, as illustrated in Table 3, after the network device determines that the service of the terminal device corresponds to the first slice, the network device configures for the terminal device the first configuration information, where the first configuration information is used to configure the first RA-prioritization for the first slice. The terminal device performs the RA procedure by directly using the first RA-prioritization.

**Table 3: First configuration information**

| Slice | RA-prioritization |
|---|---|
| first slice | first RA-prioritization |

At 532, on condition that no first RA-prioritization for the first slice exists, the terminal device performs the RA procedure by using an RA-prioritization for a conventional handover procedure.

The RA-prioritization for the conventional handover procedure is a dedicated RA-prioritization for the conventional handover procedure.

When the network device does not transmit the first configuration information, the terminal device does not receive the first configuration information, or the first configuration information does not include the first RA-prioritization, there is no first RA-prioritization for the first slice for the terminal device, in this case, the terminal device can perform the RA procedure by using the RA-prioritization for the conventional handover procedure.

At 533, on condition that no first RA-prioritization for the first slice and no RA-prioritization for the conventional handover procedure exists, the terminal device performs the RA procedure by using a generic RA-prioritization.

The generic RA-prioritization may also be understood as a default RA-prioritization. Exemplarily, the generic RA-prioritization includes the following: a scaling factor for a BI is 1, and a power ramping step is a value configured in RACH-ConfigGeneric.

On condition that for the terminal device there is no first RA-prioritization for the first slice and no RA-prioritization for the conventional handover procedure, the terminal device can perform the RA procedure by using the generic RA-prioritization.

2) The terminal device performs the RA procedure by prioritizing use of the RA-prioritization for the conventional handover procedure.

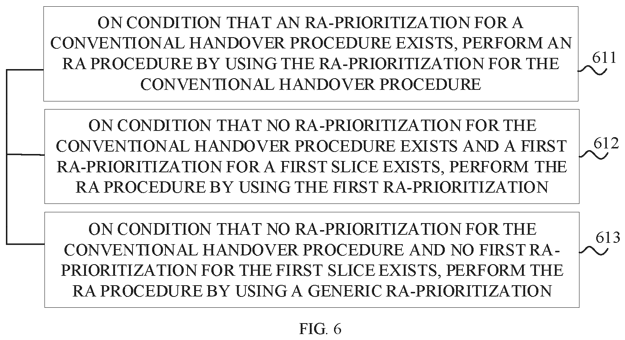

FIG. 6 is a flow chart illustrating a method for RA provided in an exemplary implementation of the disclosure. The method may be applied to the terminal device and the network device illustrated in FIG. 3. In the implementation, the method includes the following.

At 611, on condition that an RA-prioritization for a conventional handover procedure exists, the terminal device performs an RA procedure by using the RA-prioritization for the conventional handover procedure.

The RA-prioritization for the conventional handover procedure is a dedicated RA-prioritization for the conventional handover procedure.

On condition that for the terminal device there is the RA-prioritization for the conventional handover procedure, the terminal device performs the RA procedure by prioritizing use of the RA-prioritization for the conventional handover procedure.

At 612, on condition that no RA-prioritization for the conventional handover procedure exists and a first RA-prioritization for a first slice exists, the terminal device performs the RA procedure by using the first RA-prioritization.

The terminal device performs the RA procedure by prioritizing use of the RA-prioritization for the conventional handover procedure. On condition that no RA-prioritization for the conventional handover procedure exists and the first RA-prioritization for the first slice exists, the terminal device performs the RA procedure by using the first RA-prioritization.

The first slice matches a slice corresponding to the first RA-prioritization that is configured through the first configuration information. The first configuration information is used to configure the RA-prioritization for slicing. For details of the first configuration information and the first slice, reference can be made to the above implementations.

At 613, on condition that no RA-prioritization for the conventional handover procedure and no first RA-prioritization for the first slice exists, the terminal device performs the RA procedure by using a generic RA-prioritization.

The generic RA-prioritization may also be understood as a default RA-prioritization. Exemplarily, the generic RA-prioritization includes the following: a scaling factor for a BI is 1, and a power ramping step is a value configured in RACH-ConfigGeneric.

On condition that for the terminal device there is no RA-prioritization for the conventional handover procedure and no first RA-prioritization for the first slice, the terminal device can perform the RA procedure by using the generic RA-prioritization.

To sum up, according to the method provided in the implementation, the network device indicates the RA-prioritization for slicing through the first configuration information, and the terminal device in the handover procedure prioritizes use of the RA-prioritization for slicing, thereby realizing slice-based access control, and ensuring that terminal devices supporting different slices have different priorities to access a target network device or a network.

In this case, according to the method provided in the implementation, the terminal device can also prioritize use of the RA-prioritization for the conventional handover procedure, to realize access control for a handover procedure.

Second, the terminal device is in the BFR procedure.
1) The terminal device performs the RA procedure by prioritizing use of the RA-prioritization for slicing.

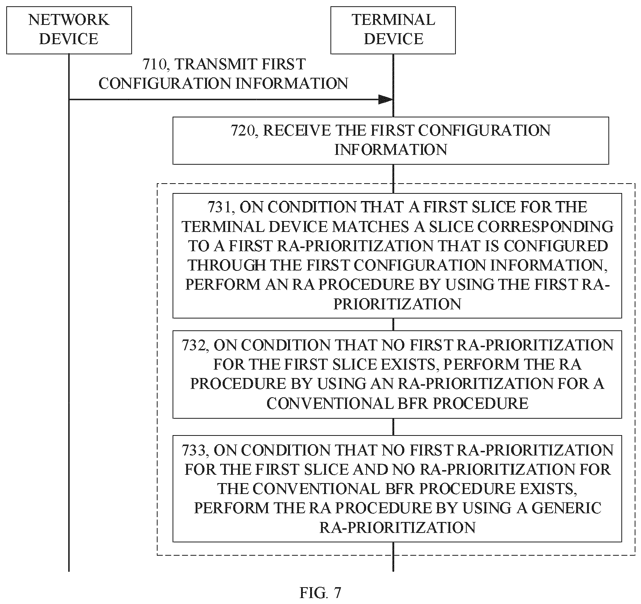

In an optional implementation based on FIG. 4, FIG. 7 is a flow chart illustrating a method for RA provided in an exemplary implementation of the disclosure. The method may be applied to the terminal device and the network device illustrated in FIG. 3. In the implementation, the method includes the following.

At 710, the network device transmits first configuration information.

The first configuration information is used to configure an RA-prioritization for slicing. Multiple RA-prioritizations for slicing or only one RA-prioritization for slicing can be configured through the first configuration information, which is not limited in implementations of the disclosure.

Optionally, a use granularity of the RA-prioritization for slicing includes: a single slice, a slice group including at least two slices, all slices, a single slice group, at least two slice groups, or all slice groups. The slice group is a group formed by classifying slices, and one slice group includes at least one slice.

Optionally, the first configuration information is carried in at least one of SI or an RRC dedicated message. The RRC dedicated message includes, but is not limited to, BWP-Uplink Dedicated, BWP-Uplink common, RACH-ConfigDedicated, an RRC reconfiguration message, or an RRC release message.

Optionally, the first configuration information further includes an RA-prioritization for a BFR procedure.

Optionally, the RA-prioritization includes at least one of a power ramping step or a scaling factor for a BI, where the power ramping step is used to determine a power for preamble retransmission, and the scaling factor for the BI is used to select a time for preamble retransmission.

In an implementation, the first configuration information can directly indicate a value of an RA-prioritization. In another implementation, the first configuration information indicates powerRampingStepHighPriority, scalingFactorBI, and adjustment factor K or adjustment value M.

At 720, the terminal device receives the first configuration information.

The first configuration information is used to configure the RA-prioritization for slicing. Optionally, the first configuration information further includes the RA-prioritization for the BFR procedure.

At 731, on condition that a first slice for the terminal device matches a slice corresponding to a first RA-prioritization that is configured through the first configuration information, the terminal device performs an RA procedure by using the first RA-prioritization.

The first slice is a slice selected by the terminal device, a slice the terminal device is interested in, or a slice with a highest priority for the terminal device. On condition that the first RA-prioritization for the first slice is configured through the first configuration information, the terminal device performs the RA procedure by using the first RA-prioritization.

Optionally, the first slice is a slice for a service of the terminal device, where the service includes, but is not limited to, at least one of: a currently established service, a current serving service, or a service to-be-required by the terminal device. The service to-be-required by the terminal device refers to a service required by the terminal device within a period of time of a predetermined duration, where the start time of the period of time is the current time. Optionally, an AS of the terminal device obtains a correspondence between services and slices from an NAS of the terminal device. Optionally, if there are multiple types of services, the terminal device can select a service the terminal device is most interested in or a service with a highest priority for the terminal device.

Optionally, the first slice is pre-configured or indicated to the terminal device by the network device.

In an implementation, RA-prioritizations for at least two slices are configured through the first configuration information, and the operation at 731 includes the following. On condition that the RA-prioritizations for the at least two slices are configured through the first configuration information, determine the first RA-prioritization for the first slice from the RA-prioritizations for the at least two slices according to the first slice, and perform the RA procedure by using the first RA-prioritization.

In another implementation, the first RA-prioritization for the first slice is configured through the first configuration information, and the operation at 731 includes the following. On condition that the first RA-prioritization for the first slice is configured through the first configuration information, perform the RA procedure by using the first RA-prioritization.

At 732, on condition that no first RA-prioritization for the first slice exists, the terminal device performs the RA procedure by using an RA-prioritization for a conventional BFR procedure.

The RA-prioritization for the conventional BFR procedure is a dedicated RA-prioritization for the conventional BFR procedure.

When the network device does not transmit the first configuration information, the terminal device does not receive the first configuration information, or the first configuration information does not include the first RA-prioritization, there is no first RA-prioritization for the first slice for the terminal device, in this case, the terminal device can perform the RA procedure by using the RA-prioritization for the conventional BFR procedure.

At 733, on condition that no first RA-prioritization for the first slice and no RA-prioritization for the conventional BFR procedure exists, the terminal device performs the RA procedure by using a generic RA-prioritization.

The generic RA-prioritization may also be understood as a default RA-prioritization. Exemplarily, the generic RA-prioritization includes the following: a scaling factor for a BI is 1, and a power ramping step is a value configured in RACH-ConfigGeneric.

On condition that for the terminal device there is no first RA-prioritization for the first slice and no RA-prioritization for the conventional BFR procedure, the terminal device can perform the RA procedure by using the generic RA-prioritization.

2) The terminal device performs the RA procedure by prioritizing use of the RA-prioritization for the conventional BFR procedure.

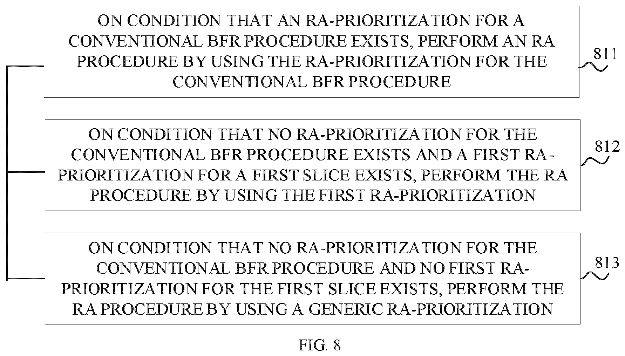

FIG. 8 is a flow chart illustrating a method for RA provided in an exemplary implementation of the disclosure. The method may be applied to the terminal device and the network device illustrated in FIG. 3. In the implementation, the method includes the following.

At 811, on condition that an RA-prioritization for a conventional BFR procedure exists, the terminal device performs an RA procedure by using the RA-prioritization for the conventional BFR procedure.

The RA-prioritization for the conventional BFR procedure is a dedicated RA-prioritization for the conventional BFR procedure.

On condition that for the terminal device there is the RA-prioritization for the conventional BFR procedure, the terminal device performs the RA procedure by prioritizing use of the RA-prioritization for the conventional BFR procedure.

At 812, on condition that no RA-prioritization for the conventional BFR procedure exists and a first RA-prioritization for a first slice exists, the terminal device performs the RA procedure by using the first RA-prioritization.

The terminal device performs the RA procedure by prioritizing use of the RA-prioritization for the conventional BFR procedure. On condition that no RA-prioritization for the conventional BFR procedure exists and the first RA-prioritization for the first slice exists, the terminal device performs the RA procedure by using the first RA-prioritization.

The first slice matches a slice corresponding to the first RA-prioritization that is configured through the first configuration information. The first configuration information is used to configure the RA-prioritization for slicing. For details of the first configuration information and the first slice, reference can be made to the above implementations.

At 813, on condition that no RA-prioritization for the conventional BFR procedure and no first RA-prioritization for the first slice exists, the terminal device performs the RA procedure by using a generic RA-prioritization.

The generic RA-prioritization may also be understood as a default RA-prioritization. Exemplarily, the generic RA-prioritization includes the following: a scaling factor for a BI is 1, and a power ramping step is a value configured in RACH-ConfigGeneric.

On condition that for the terminal device there is no RA-prioritization for the conventional BFR procedure and no first RA-prioritization for the first slice, the terminal device can perform the RA procedure by using the generic RA-prioritization.

To sum up, according to the method provided in the implementation, the network device indicates the RA-prioritization for slicing through the first configuration information, and the terminal device in the BFR procedure prioritizes use of the RA-prioritization for slicing, thereby realizing slice-based access control, and ensuring that terminal devices supporting different slices have different priorities to access a target network device or a network.

In this case, according to the method provided in the implementation, the terminal device can also prioritize use of the RA-prioritization for the conventional BFR procedure, to realize access control for a BFR procedure.

Third, the terminal device belongs to the specific-type terminal device.
1) The terminal device performs the RA procedure by prioritizing use of the RA-prioritization for slicing.

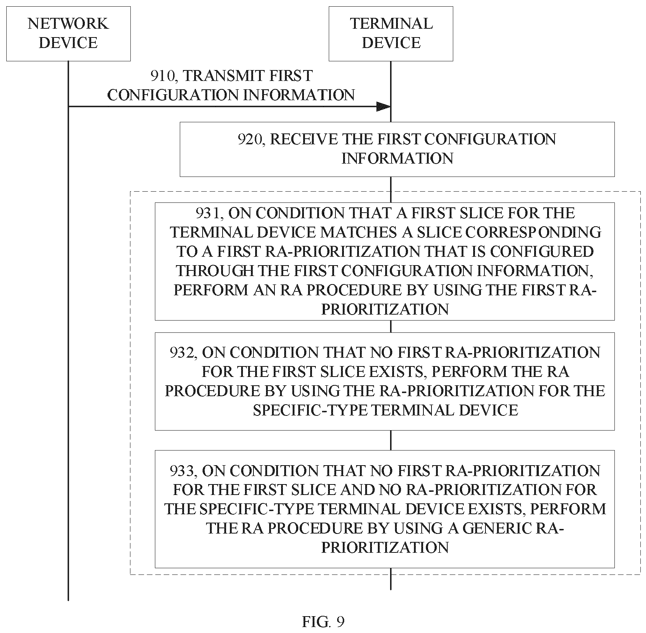

In an optional implementation based on FIG. 4, FIG. 9 is a flow chart illustrating a method for RA provided in an exemplary implementation of the disclosure. The method may be applied to the terminal device and the network device illustrated in FIG. 3. In the implementation, the method includes the following.

At 910, the network device transmits first configuration information.

The first configuration information is used to configure an RA-prioritization for slicing. Multiple RA-prioritizations for slicing or only one RA-prioritization for slicing can be configured through the first configuration information, which is not limited in implementations of the disclosure.

Optionally, a use granularity of the RA-prioritization for slicing includes: a single slice, a slice group including at least two slices, all slices, a single slice group, at least two slice groups, or all slice groups. The slice group is a group formed by classifying slices, and one slice group includes at least one slice.

Optionally, the first configuration information is carried in at least one of SI or an RRC dedicated message. The RRC dedicated message includes, but is not limited to, BWP-Uplink Dedicated, BWP-Uplink common, RACH-ConfigDedicated, an RRC reconfiguration message, or an RRC release message.

Optionally, the first configuration information further includes an RA-prioritization for the specific-type terminal device.

Optionally, the RA-prioritization includes at least one of a power ramping step or a scaling factor for a BI, where the power ramping step is used to determine a power for preamble retransmission, and the scaling factor for the BI is used to select a time for preamble retransmission.

In an implementation, the first configuration information can directly indicate a value of an RA-prioritization. In another implementation, the first configuration information indicates powerRampingStepHighPriority, scalingFactorBI, and adjustment factor K or adjustment value M.

At 920, the terminal device receives the first configuration information.

The first configuration information is used to configure the RA-prioritization for slicing. Optionally, the first configuration information further includes the RA-prioritization for the specific-type terminal device.

At 931, on condition that a first slice for the terminal device matches a slice corresponding to a first RA-prioritization that is configured through the first configuration information, the terminal device performs an RA procedure by using the first RA-prioritization.

The first slice is a slice selected by the terminal device, a slice the terminal device is interested in, or a slice with a highest priority for the terminal device. On condition that the first RA-prioritization for the first slice is configured through the first configuration information, the terminal device performs the RA procedure by using the first RA-prioritization.

Optionally, the first slice is a slice for a service of the terminal device, where the service includes, but is not limited to, at least one of: a currently established service, a current serving service, or a service to-be-required by the terminal device. The service to-be-required by the terminal device refers to a service required by the terminal device within a period of time of a predetermined duration, where the start time of the period of time is the current time. Optionally, an AS of the terminal device obtains a correspondence between services and slices from an NAS of the terminal device. Optionally, if there are multiple types of services, the terminal device can select a service the terminal device is most interested in or a service with a highest priority for the terminal device.

Optionally, the first slice is pre-configured or indicated to the terminal device by the network device.

In an implementation, RA-prioritizations for at least two slices are configured through the first configuration information, and the operation at 931 includes the following. On condition that the RA-prioritizations for the at least two slices are configured through the first configuration information, determine the first RA-prioritization for the first slice from the RA-prioritizations for the at least two slices according to the first slice, and perform the RA procedure by using the first RA-prioritization.

In another implementation, the first RA-prioritization for the first slice is configured through the first configuration information, and the operation at 931 includes the following. On condition that the first RA-prioritization for the first slice is configured through the first configuration information, perform the RA procedure by using the first RA-prioritization.

At 932, on condition that no first RA-prioritization for the first slice exists, the terminal device performs the RA procedure by using the RA-prioritization for the specific-type terminal device.

The RA-prioritization for the specific-type terminal device is a dedicated RA-prioritization for the specific-type terminal device. Optionally, the specific-type terminal device includes at least one of an MPS terminal device or an MCS terminal device.

When the network device does not transmit the first configuration information, the terminal device does not receive the first configuration information, or the first configuration information does not include the first RA-prioritization, there is no first RA-prioritization for the first slice for the terminal device, in this case, the terminal device can perform the RA procedure by using the RA-prioritization for the specific-type terminal device.

At 933, on condition that no first RA-prioritization for the first slice and no RA-prioritization for the specific-type terminal device exists, the terminal device performs the RA procedure by using a generic RA-prioritization.

The generic RA-prioritization may also be understood as a default RA-prioritization. Exemplarily, the generic RA-prioritization includes the following: a scaling factor for a BI is 1, and a power ramping step is a value configured in RACH-ConfigGeneric.

On condition that for the terminal device there is no first RA-prioritization for the first slice and no RA-prioritization for the specific-type terminal device, the terminal device can perform the RA procedure by using the generic RA-prioritization.

2) The terminal device performs the RA procedure by prioritizing use of the RA-prioritization for the specific-type terminal device.

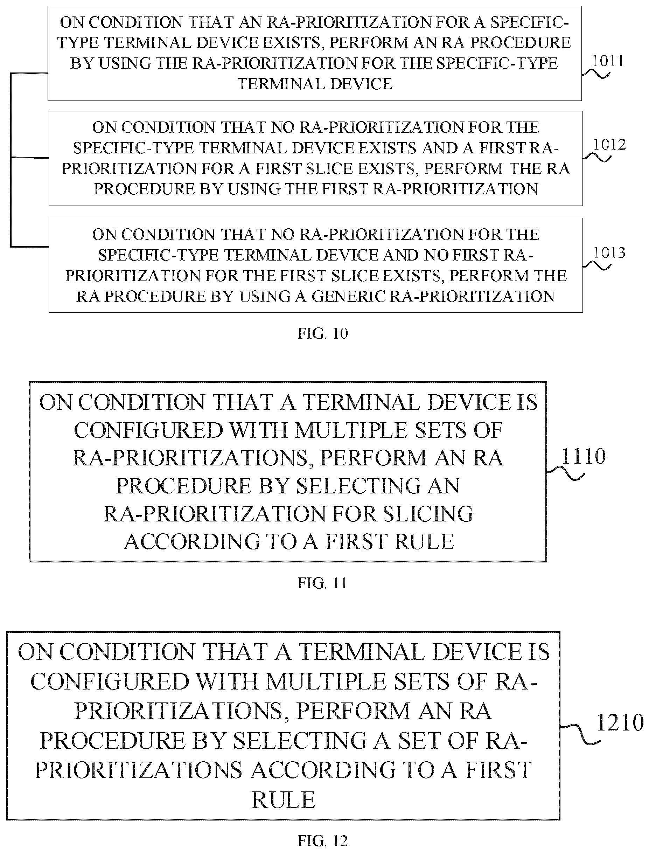

FIG. 10 is a flow chart illustrating a method for RA provided in an exemplary implementation of the disclosure. The method may be applied to the terminal device and the network device illustrated in FIG. 3. In the implementation, the method includes the following.

At 1011, on condition that an RA-prioritization for a specific-type terminal device exists, the terminal device performs an RA procedure by using the RA-prioritization for the specific-type terminal device.

The RA-prioritization for the specific-type terminal device is a dedicated RA-prioritization for the specific-type terminal device. Optionally, the specific-type terminal device includes at least one of an MPS terminal device or an MCS terminal device.

On condition that for the terminal device there is the RA-prioritization for the specific-type terminal device, the terminal device performs the RA procedure by prioritizing use of the RA-prioritization for the specific-type terminal device.

At 1012, on condition that no RA-prioritization for the specific-type terminal device exists and a first RA-prioritization for a first slice exists, the terminal device performs the RA procedure by using the first RA-prioritization.

The terminal device performs the RA procedure by prioritizing use of the RA-prioritization for the specific-type terminal device. On condition that no RA-prioritization for the specific-type terminal device exists and the first RA-prioritization for the first slice exists, the terminal device performs the RA procedure by using the first RA-prioritization.

The first slice matches a slice corresponding to the first RA-prioritization that is configured through the first configuration information. The first configuration information is used to configure the RA-prioritization for slicing. For details of the first configuration information and the first slice, reference can be made to the above implementations.

At 1013, on condition that no RA-prioritization for the specific-type terminal device and no first RA-prioritization for the first slice exists, the terminal device performs the RA procedure by using a generic RA-prioritization.

The generic RA-prioritization may also be understood as a default RA-prioritization. Exemplarily, the generic RA-prioritization includes the following: a scaling factor for a BI is 1, and a power ramping step is a value configured in RACH-ConfigGeneric.

On condition that for the terminal device there is no RA-prioritization for the specific-type terminal device and no first RA-prioritization for the first slice, the terminal device can perform the RA procedure by using the generic RA-prioritization.

To sum up, according to the method provided in the implementation, the network device indicates the RA-prioritization for slicing through the first configuration information, and the specific-type terminal device can use the RA-prioritization for slicing, thereby realizing slice-based access control, and ensuring that terminal devices supporting different slices have different priorities to access a target network device or a network.

In this case, according to the method provided in the implementation, the terminal device can also prioritize use of the RA-prioritization for the specific-type terminal device, to realize access control for a type of the terminal device.

On condition that the terminal device is configured with multiple sets of RA-prioritizations, a behavior of the terminal device will be exemplarily illustrated as follows.

In an optional implementation based on FIG. 4, FIG. 11 is a flow chart illustrating a method for RA provided in an exemplary implementation of the disclosure. The method may be applied to the terminal device illustrated in FIG. 3. In the implementation, the method includes the following.

At 1110, on condition that the terminal device is configured with multiple sets of RA-prioritizations, perform an RA procedure by selecting an RA-prioritization for slicing according to a first rule.

The multiple sets of RA-prioritizations include the RA-prioritization for slicing and at least one of: an RA-prioritization for a handover procedure, an RA-prioritization for a BFR procedure, or an RA-prioritization for a specific-type terminal device.

On condition that the terminal device is configured with the multiple sets of RA-prioritizations that include the RA-prioritization for slicing, the terminal device performs the RA procedure by prioritizing use of the RA-prioritization for slicing.

Alternatively, on condition that the terminal device is configured with the multiple sets of RA-prioritizations that include the RA-prioritization for slicing, the terminal device performs the RA procedure by prioritizing use of at least one of the RA-prioritization for the handover procedure, the RA-prioritization for the BFR procedure, or the RA-prioritization for the specific-type terminal device. That is to say, on condition that the terminal device is configured with only the RA-prioritization for slicing and not configured with at least one of the RA-prioritization for the handover procedure, the RA-prioritization for the BFR procedure, or the RA-prioritization for the specific-type terminal device, the terminal device performs the RA procedure by prioritizing use of the RA-prioritization for slicing.

FIG. 12 is a flow chart illustrating a method for RA provided in an exemplary implementation of the disclosure. The method may be applied to the terminal device illustrated in FIG. 3. In the implementation, the method includes the following.

At 1210, on condition that the terminal device is configured with multiple sets of RA-prioritizations, perform an RA procedure by selecting a set of RA-prioritizations according to a first rule.

The multiple sets of RA-prioritizations include at least one of: an RA-prioritization for a handover procedure, an RA-prioritization for a BFR procedure, an RA-prioritization for a specific-type terminal device, or an RA-prioritization for slicing. It can be understood that, with evolution of communication technology, other types of RA-prioritizations may be introduced, and the multiple sets of RA-prioritizations may also include other types of RA-prioritizations, which are not limited in implementations of the disclosure.

The RA-prioritization is a parameter that the terminal device needs to use in the RA procedure, and indicates different RA priorities. Optionally, the RA-prioritization includes at least one of a power ramping step or a scaling factor for a BI. The power ramping step is for determining a power for preamble retransmission, and the scaling factor for the BI is for selecting a time for preamble retransmission.

In implementations of the disclosure, the RA-prioritization for slicing is introduced. Optionally, a use granularity of the RA-prioritization for slicing includes: a single slice, a slice group including at least two slices, all slices, a single slice group, at least two slice groups, or all slice groups. The slice group is a group formed by classifying slices, and one slice group includes at least one slice.

Optionally, before the operation at 1210, the network device transmits second configuration information to the terminal device, where the second configuration information is used to configure the multiple sets of RA-prioritizations. Accordingly, the terminal device receives the second configuration information, where the second configuration information is used to configure the multiple sets of RA-prioritizations.

Optionally, the second configuration information is carried in at least one of SI or an RRC dedicated message. Optionally, the RRC dedicated message includes, but is not limited to, BWP-Uplink Dedicated, BWP-Uplink common, RACH-ConfigDedicated, an RRC reconfiguration message, or an RRC release message.

The first rule is used to select a set of RA-prioritizations in the multiple sets of RA-prioritizations. The following will exemplarily illustrate different implementations of the first rule.

In an implementation, the operation at 1210 includes performing the RA procedure by using an RA-prioritization with optimal performance in the multiple sets of RA-prioritizations.

The RA-prioritization with optimal performance may be a minimum scaling factor for a BI or a maximum power ramping step.

Exemplarily, the multiple sets of RA-prioritizations include: a first set of RA-prioritizations in which a scaling factor for a BI is 0 and a power ramping step is 4 decibels (dB), a second set of RA-prioritizations in which a scaling factor for a BI is 0.75 and a power ramping step is 6 dB, and a third set of RA-prioritizations in which a scaling factor for a BI is 0.25 and a power ramping step is 2 dB. The RA-prioritization with optimal performance may be the first set of RA-prioritizations (corresponding to a minimum scaling factor for a BI), the second set of RA-prioritizations (corresponding to a maximum power ramping step), or the third set of RA-prioritizations (taking into consideration both a scaling factor for a BI and a power ramping step).

In an implementation, the operation at 1210 includes the following. Receive an indication from a network device, and perform the RA procedure by using an RA-prioritization that is indicated by the indication.

The indication indicates a set of RA-prioritizations in the multiple sets of RA-prioritizations.

Exemplarily, the indication indicates the RA-prioritization for slicing, and then the terminal device performs the RA procedure by using the RA-prioritization for slicing.

In an implementation, the operation at 1210 includes performing the RA procedure by using an RA-prioritization with a highest priority in the multiple sets of RA-prioritizations.

Priorities of the multiple sets of RA-prioritizations are predefined or configured by the network device.

Exemplarily, a priority of the RA-prioritization for the BFR procedure > a priority of the RA-prioritization for the handover procedure > a priority of the RA-prioritization for the specific-type terminal device > a priority of the RA-prioritization for slicing > a priority of the generic RA-prioritization. On condition that multiple RA-prioritizations for slicing exist, the multiple RA-prioritizations for slicing may also be ranked in terms of priorities.

Exemplarily, the priority of the RA-prioritization for slicing > the priority of the generic RA-prioritization > the priority of the RA-prioritization for the BFR procedure > the priority of the RA-prioritization for the handover procedure > the priority of the RA-prioritization for the specific-type terminal device. On condition that multiple RA-prioritizations for slicing exist, the multiple RA-prioritizations for slicing may also be ranked in terms of priorities.

To sum up, according to the method provided in the implementation, on condition that multiple sets of RA-prioritizations are configured, the terminal device can select the RA-prioritization according to the first rule, thereby specifying a behavior of the terminal device and ensuring that the terminal device selects a suitable RA-prioritization, and thus the network device reasonably performs access control.

It needs to be noted that, the above method implementations may be implemented separately or in combination, which are not limited herein.

In the above implementations, the operations performed by the terminal device can be separately implemented as the method for RA performed by the terminal device, and the operations performed by the network device can be separately implemented as the method for RA performed by the network device.

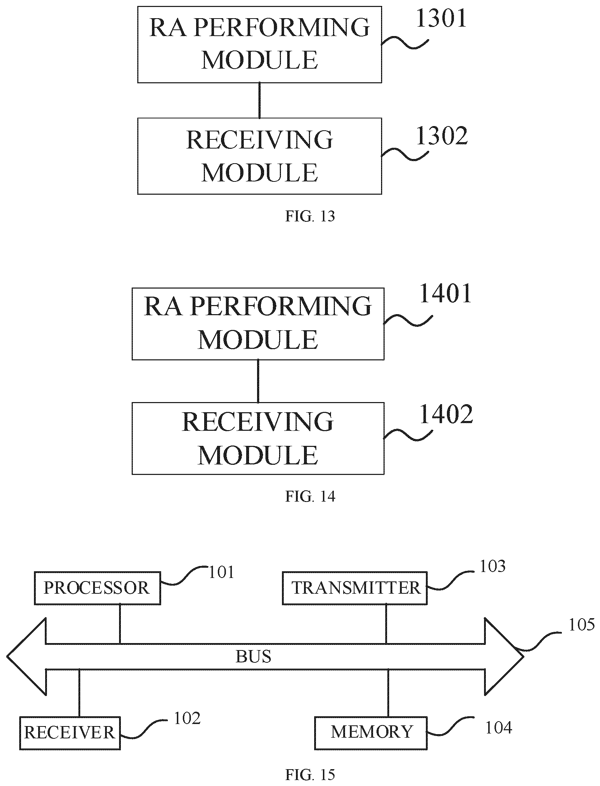

FIG. 13 is a structural block diagram illustrating an apparatus for RA provided in an exemplary implementation of the disclosure. The apparatus may be implemented as a terminal device or part of the terminal device. The apparatus includes an RA performing module 1301. The RA performing module 1301 is configured to perform an RA procedure by using an RA-prioritization for slicing on condition that a use condition is satisfied.

In an optional implementation, the use condition includes at least one of: the terminal device being in a handover procedure, the terminal device being in a BFR procedure, or the terminal device belonging to a specific-type terminal device.

In an optional implementation, the RA performing module 1301 is configured to perform the RA procedure by using a first RA-prioritization on condition that a first slice for the terminal device matches a slice corresponding to the first RA-prioritization that is configured through first configuration information.

In an optional implementation, the RA performing module 1301 is configured to determine, according to the first slice, the first RA-prioritization for the first slice from RA-prioritizations for at least two slices on condition that the RA-prioritizations for the at least two slices are configured through the first configuration information, and perform the RA procedure by using the first RA-prioritization. Alternatively, the RA performing module 1301 is configured to perform the RA procedure by using the first RA-prioritization on condition that the first RA-prioritization for the first slice is configured through the first configuration information.

In an optional implementation, the use condition is that the terminal device is in the handover procedure. The RA performing module 1301 is configured to perform the RA procedure by using an RA-prioritization for a conventional handover procedure on condition that no first RA-prioritization for the first slice exists. Alternatively, the RA performing module 1301 is configured to perform the RA procedure by using a generic RA-prioritization on condition that no first RA-prioritization for the first slice and no RA-prioritization for the conventional handover procedure exists.

In an optional implementation, the use condition is that the terminal device is in the handover procedure. The RA performing module 1301 is configured to perform the RA procedure by using the RA-prioritization for the conventional handover procedure on condition that the RA-prioritization for the conventional handover procedure exists. Alternatively, the RA performing module 1301 is configured to perform the RA procedure by using the first RA-prioritization on condition that no RA-prioritization for the conventional handover procedure exists and the first RA-prioritization for the first slice exists. Alternatively, the RA performing module 1301 is configured to perform the RA procedure by using the generic RA-prioritization on condition that no RA-prioritization for the conventional handover procedure and no first RA-prioritization for the first slice exists.

In an optional implementation, the use condition is that the terminal device is in the BFR procedure. The RA performing module 1301 is configured to perform the RA procedure by using the RA-prioritization for the conventional BFR procedure on condition that no first RA-prioritization for the first slice exists. Alternatively, the RA performing module 1301 is configured to perform the RA procedure by using the generic RA-prioritization on condition that no first RA-prioritization for the first slice and no RA-prioritization for the conventional BFR procedure exists.

In an optional implementation, the use condition is that the terminal device is in the BFR procedure. The RA performing module 1301 is configured to perform the RA procedure by using the RA-prioritization for the conventional BFR procedure on condition that the RA-prioritization for the conventional BFR procedure exists. Alternatively, the RA performing module 1301 is configured to perform the RA procedure by using the first RA-prioritization on condition that no RA-prioritization for the conventional BFR procedure exists and the first RA-prioritization for the first slice exists, where the first slice matches the slice corresponding to the first RA-prioritization that is configured through the first configuration information. Alternatively, the RA performing module 1301 is configured to perform the RA procedure by using the generic RA-prioritization on condition that no RA-prioritization for the conventional BFR procedure and no first RA-prioritization for the first slice exists.

In an optional implementation, the use condition is that the terminal device belongs to the specific-type terminal device. The RA performing module 1301 is configured to perform the RA procedure by using the RA-prioritization for the specific-type terminal device on condition that no first RA-prioritization for the first slice exists. Alternatively, the RA performing module 1301 is configured to perform the RA procedure by using the generic RA-prioritization on condition that no first RA-prioritization for the first slice and no RA-prioritization for the specific-type terminal device exists.

In an optional implementation, the use condition is that the terminal device belongs to the specific-type terminal device. The RA performing module 1301 is configured to perform the RA procedure by using the RA-prioritization for the specific-type terminal device on condition that the RA-prioritization for the specific-type terminal device exists. Alternatively, the RA performing module 1301 is configured to perform the RA procedure by using the first RA-prioritization on condition that no RA-prioritization for the specific-type terminal device exists and the first RA-prioritization for the first slice exists, where the first slice matches the slice corresponding to the first RA-prioritization that is configured through the first configuration information. Alternatively, the RA performing module 1301 is configured to perform the RA procedure by using the generic RA-prioritization on condition that no RA-prioritization for the specific-type terminal device and no first RA-prioritization for the first slice exists.

In an optional implementation, the first slice is a slice for a service of the terminal device, where the service includes at least one of: a currently established service, a current serving service, or a service to-be-required by the terminal device. Alternatively, the first slice is pre-configured. Alternatively, the first slice is indicated by a network device.

In an optional implementation, the specific-type terminal device includes at least one of an MPS terminal device or an MCS terminal device.

In an optional implementation, the apparatus further includes a receiving module 1302. The receiving module 1302 is configured to receive the first configuration information, where the first configuration information is used to configure the RA-prioritization for slicing.

In an optional implementation, the first configuration information is carried in at least one of SI or an RRC dedicated message.

In an optional implementation, the RRC dedicated message includes, but is not limited to, BWP-Uplink Dedicated, BWP-Uplink common, RACH-ConfigDedicated, an RRC reconfiguration message, or an RRC release message.

In an optional implementation, the RA-prioritization includes at least one of a power ramping step or a scaling factor for a BI.

In an optional implementation, a use granularity of the RA-prioritization for slicing includes: a single slice, a slice group including at least two slices, all slices, a single slice group, at least two slice groups, or all slice groups.

In an optional implementation, the RA performing module 1301 is configured to perform the RA procedure by selecting the RA-prioritization for slicing according to a first rule on condition that the terminal device is configured with multiple sets of RA-prioritizations. The multiple sets of RA-prioritizations include the RA-prioritization for slicing and at least one of: an RA-prioritization for a handover procedure, an RA-prioritization for a BFR procedure, or an RA-prioritization for a specific-type terminal device.

FIG. 14 is a structural block diagram illustrating an apparatus for RA provided in an exemplary implementation of the disclosure. The apparatus may be implemented as a terminal device or part of the terminal device. The apparatus includes an RA performing module 1401. The RA performing module 1401 is configured to perform an RA procedure by selecting a set of RA-prioritizations according to a first rule on condition that the terminal device is configured with multiple sets of RA-prioritizations. The multiple sets of RA-prioritizations include at least one of: an RA-prioritization for a handover procedure, an RA-prioritization for a BFR procedure, an RA-prioritization for a specific-type terminal device, or an RA-prioritization for slicing.

In an optional implementation, the RA performing module 1401 is configured to perform the RA procedure by using an RA-prioritization with optimal performance in the multiple sets of RA-prioritizations.

In an optional implementation, the apparatus further includes a receiving module 1402. The receiving module 1402 is configured to receive an indication from a network device. The receiving module 1402 is configured to perform the RA procedure by using an RA-prioritization that is indicated by the indication in the multiple sets of RA-prioritizations.

In an optional implementation, the RA performing module 1401 is configured to perform the RA procedure by using an RA-prioritization with a highest priority in the multiple sets of RA-prioritizations.

In an optional implementation, the apparatus further includes a receiving module 1402. The receiving module 1402 is configured to receive second configuration information, where the second configuration information is used to configure the multiple sets of RA-prioritizations.

In an optional implementation, the second configuration information is carried in at least one of SI or an RRC dedicated message.

In an optional implementation, the RA-prioritization includes at least one of a power ramping step or a scaling factor for a BI.

In an optional implementation, a use granularity of the RA-prioritization for slicing includes: a single slice, a slice group including at least two slices, all slices, a single slice group, at least two slice groups, or all slice groups.

FIG. 15 is a schematic structural diagram illustrating a communication device (a terminal device or a network device) provided in an exemplary implementation of the disclosure. The communication device includes a processor 101, a receiver 102, a transmitter 103, a memory 104, and a bus 105.

The processor 101 includes one or more processing cores and is configured to perform various functional applications and information processing by executing software programs and modules.

The receiver 102 and the transmitter 103 may be implemented as a communication assembly, where the communication assembly may be a communication chip.

The memory 104 is coupled with the processor 101 via the bus 105.

The memory 104 is configured to store at least one instruction, and the processor 101 is configured to execute the at least one instruction to implement the various operations in the foregoing method implementations.

In addition, the memory 104 may be implemented as a volatile or a non-volatile storage device or a combination thereof, where the volatile or a non-volatile storage device includes, but is not limited to, a magnetic disc or an optical disc, an electrically-erasable programmable read-only memory (EEPROM), an erasable programmable read-only memory (EPROM), a static random access memory (SRAM), a read-only memory (ROM), a magnetic memory, a flash memory, or a programmable read-only memory (PROM).

In an exemplary implementation, a computer-readable storage medium is further provided. The computer-readable storage medium is configured to store at least one instruction, at least one program, a code set, or an instruction set which are loaded and executed by a processor to implement the methods for RA performed by the communication device and provided in the foregoing method implementations.

In an exemplary implementation, a computer program product or a computer program is further provided. The computer program product or the computer program includes a computer instruction stored in a computer-readable storage medium. A processor of a computer device is configured to read the computer instruction from the computer-readable storage medium and then execute the computer instruction to enable the computer device to perform the methods for RA in the above aspects.

It will be understood by those of ordinary skills in the art that all or part of the above implementations may be accomplished by means of hardware or a program to instruct associated hardware, and the program may be stored in a computer-readable storage medium which may be an ROM, a magnetic disc, or an optical disc.

The above are merely optional implementations of the disclosure and are not intended to limit the disclosure. Any modification, equivalent arrangements, and improvement made within the spirit and principles of the disclosure shall be included in the scope of protection of the disclosure.

The following numbered clauses, describing aspects of the disclosure, are part of the description.
1. A method for random access (RA), the method being applied to a terminal device and comprising:
   performing an RA procedure by using an RA-prioritization for slicing on condition that a use condition is satisfied.
2. The method of clause 1, wherein the use condition comprises at least one of:
   the terminal device being in a handover procedure;
   the terminal device being in a beam failure recovery (BFR) procedure; or
   the terminal device belonging to a specific-type terminal device.
3. The method of clause 1 or 2, wherein performing the RA procedure by using the RA-prioritization for slicing comprises:
   on condition that a first slice for the terminal device matches a slice corresponding to a first RA-prioritization that is configured through first configuration information, performing the RA procedure by using the first RA-prioritization.
4. The method of clause 3, wherein on condition that the first slice for the terminal device matches the slice corresponding to the first RA-prioritization that is configured through the first configuration information, performing the RA procedure by using the first RA-prioritization comprises:
   on condition that RA-prioritizations for at least two slices are configured through the first configuration information, determining, according to the first slice, the first RA-prioritization for the first slice from the RA-prioritizations for the at least two slices, and performing the RA procedure by using the first RA-prioritization; or
   on condition that the first RA-prioritization for the first slice is configured through the first configuration information, performing the RA procedure by using the first RA-prioritization.
5. The method of clause 3, wherein the use condition is that the terminal device is in the handover procedure, and the method further comprises:
   on condition that no first RA-prioritization for the first slice exists, performing the RA procedure by using an RA-prioritization for a conventional handover procedure; or
   on condition that no first RA-prioritization for the first slice and no RA-prioritization for the conventional handover procedure exists, performing the RA procedure by using a generic RA-prioritization.
6. The method of clause 1 or 2, wherein the use condition is that the terminal device is in the handover procedure, and the method further comprises:
   on condition that an RA-prioritization for a conventional handover procedure exists, performing the RA procedure by using the RA-prioritization for the conventional handover procedure;
   on condition that no RA-prioritization for the conventional handover procedure exists and a first RA-prioritization for a first slice exists, performing the RA procedure by using the first RA-prioritization, wherein the first slice matches a slice corresponding to the first RA-prioritization that is configured through first configuration information; or
   on condition that no RA-prioritization for the conventional handover procedure and no first RA-prioritization for the first slice exists, performing the RA procedure by using a generic RA-prioritization.
7. The method of clause 3, wherein the use condition is that the terminal device is in the BFR procedure, and the method further comprises:
   on condition that no first RA-prioritization for the first slice exists, performing the RA procedure by using an RA-prioritization for a conventional BFR procedure; or
   on condition that no first RA-prioritization for the first slice and no RA-prioritization for the conventional BFR procedure exists, performing the RA procedure by using a generic RA-prioritization.
8. The method of clause 1 or 2, wherein the use condition is that the terminal device is in the BFR procedure, and the method further comprises:
   on condition that an RA-prioritization for a conventional BFR procedure exists, performing the RA procedure by using the RA-prioritization for the conventional BFR procedure;
   on condition that no RA-prioritization for the conventional BFR procedure exists and a first RA-prioritization for a first slice exists, performing the RA procedure by using the first RA-prioritization, wherein the first slice matches a slice corresponding to the first RA-prioritization that is configured through first configuration information; or
   on condition that no RA-prioritization for the conventional BFR procedure and no first RA-prioritization for the first slice exists, performing the RA procedure by using a generic RA-prioritization.
9. The method of clause 3, wherein the use condition is that the terminal device belongs to the specific-type terminal device, and the method further comprises:
   on condition that no first RA-prioritization for the first slice exists, performing the RA procedure by using an RA-prioritization for the specific-type terminal device; or
   on condition that no first RA-prioritization for the first slice and no RA-prioritization for the specific-type terminal device exists, performing the RA procedure by using a generic RA-prioritization.
10. The method of clause 1 or 2, wherein the use condition is that the terminal device belongs to the specific-type terminal device, and the method further comprises:
   on condition that an RA-prioritization for the specific-type terminal device exists, performing the RA procedure by using the RA-prioritization for the specific-type terminal device;
   on condition that no RA-prioritization for the specific-type terminal device exists and a first RA-prioritization for a first slice exists, performing the RA procedure by using the first RA-prioritization, wherein the first slice matches a slice corresponding to the first RA-prioritization that is configured through first configuration information; or
   on condition that no RA-prioritization for the specific-type terminal device and no first RA-prioritization for the first slice exists, performing the RA procedure by using a generic RA-prioritization.
11. The method of any one of clauses 3 to 10, wherein
   the first slice is a slice for a service of the terminal device, wherein the service comprises at least one of: a currently established service, a current serving service, or a service to-be-required by the terminal device;
   the first slice is pre-configured; or
   the first slice is indicated by a network device.
12. The method of clause 2, wherein the specific-type terminal device comprises at least one of:
   a multimedia priority service (MPS) terminal device; or
   a mission critical service (MCS) terminal device.
13. The method of clause 3, further comprising:
   receiving the first configuration information, wherein the first configuration information is used to configure the RA-prioritization for slicing.
14. The method of clause 13, wherein the first configuration information is carried in at least one of:
   system information (SI); or
   a radio resource control (RRC) dedicated message.
15. The method of clause 14, wherein the RRC dedicated message comprises:
   a bandwidth part uplink dedicated message (BWP-Uplink Dedicated);
   a BWP-Uplink common;
   a random access configuration dedicated message (RACH-ConfigDedicated);
   an RRC reconfiguration message; or
   an RRC release message.
16. The method of any one of clauses 1 to 15, wherein the RA-prioritization comprises at least one of:
   a power ramping step; or
   a scaling factor for a backoff indicator (BI).
17. The method of any one of clauses 1 to 15, wherein a use granularity of the RA-prioritization for slicing comprises:
   a single slice;
   a slice group comprising at least two slices;
   all slices;
   a single slice group;
   at least two slice groups; or
   all slice groups.
18. The method of clause 1, wherein performing the RA procedure by using the RA-prioritization for slicing on condition that the use condition is satisfied comprises:
   on condition that the terminal device is configured with a plurality of sets of RA-prioritizations, performing the RA procedure by selecting the RA-prioritization for slicing according to a first rule, wherein
   the plurality of sets of RA-prioritizations comprise the RA-prioritization for slicing and at least one of: an RA-prioritization for a handover procedure, an RA-prioritization for a BFR procedure, or an RA-prioritization for a specific-type terminal device.
19. A method for random access (RA), applied to a terminal device and comprising:
   on condition that the terminal device is configured with a plurality of sets of RA-prioritizations, performing an RA procedure by selecting a set of RA-prioritizations according to a first rule, wherein
   the plurality of sets of RA-prioritizations comprise at least one of: an RA-prioritization for a handover procedure, an RA-prioritization for a BFR procedure, an RA-prioritization for a specific-type terminal device, or an RA-prioritization for slicing.
20. The method of clause 19, wherein performing the RA procedure by selecting the set of RA-prioritizations according to the first rule comprises:
   performing the RA procedure by using an RA-prioritization with optimal performance in the plurality of sets of RA-prioritizations.
21. The method of clause 19, wherein performing the RA procedure by selecting the set of RA-prioritizations according to the first rule comprises:
   receiving an indication from a network device; and
   performing the RA procedure by using an RA-prioritization that is indicated by the indication in the plurality of sets of RA-prioritizations.
22. The method of clause 19, wherein performing the RA procedure by selecting the RA-prioritization for slicing according to the first rule comprises:
   performing the RA procedure by using an RA-prioritization with a highest priority in the plurality of sets of RA-prioritizations.
23. The method of any one of clauses 19 to 22, further comprising:
   receiving second configuration information, wherein the second configuration information is used to configure the plurality of sets of RA-prioritizations.
24. The method of clause 23, wherein the second configuration information is carried in at least one of:
   system information (SI); or
   a radio resource control (RRC) dedicated message.
25. The method of any one of clauses 19 to 24, wherein the RA-prioritization comprises at least one of:
   a power ramping step; or
   a scaling factor for a backoff indicator (BI).
26. The method of any one of clauses 19 to 24, wherein a use granularity of the RA-prioritization for slicing comprises:
   a single slice;
   a slice group comprising at least two slices;
   all slices;
   a single slice group;
   at least two slice groups; or
   all slice groups.
27. An apparatus for random access (RA), comprising:
   an RA performing module configured to perform an RA procedure by using an RA-prioritization for slicing on condition that a use condition is satisfied.
28. An apparatus for random access (RA), comprising:
   an RA performing module configured to perform an RA procedure by selecting a set of RA-prioritizations according to a first rule, on condition that the terminal device is configured with a plurality of sets of RA-prioritizations, wherein
   the plurality of sets of RA-prioritizations comprise at least one of: an RA-prioritization for a handover procedure, an RA-prioritization for a BFR procedure, an RA-prioritization for a specific-type terminal device, or an RA-prioritization for slicing.
29. A terminal device, comprising:
   a processor;
   a transceiver coupled with the processor; and
   a memory configured to store executable instructions for the processor, wherein the processor is configured to load and execute the executable instructions to implement the method for RA of any one of clauses 1 to 26.
30. A computer-readable storage medium configured to store executable instructions which are loaded and executed by a processor to implement the method for RA of any one of clauses 1 to 26.

## Claims

1. A method for random access, RA, applied to a terminal device and comprising:
on condition that the terminal device is configured with a plurality of sets of RA-prioritizations, performing an RA procedure by selecting a set of RA-prioritizations according to a first rule, wherein
the plurality of sets of RA-prioritizations comprise at least one of: an RA-prioritization for a specific-type terminal device, or an RA-prioritization for slicing.

2. The method of claim 1, wherein performing the RA procedure by selecting the set of RA-prioritizations according to the first rule comprises:
receiving an indication from a network device; and
performing the RA procedure by using an RA-prioritization that is indicated by the indication in the plurality of sets of RA-prioritizations.

3. The method of any one of claims 1 to 2, further comprising:
receiving second configuration information, wherein the second configuration information is used to configure the plurality of sets of RA-prioritizations.

4. The method of claim 3, wherein the second configuration information is carried in at least one of:
system information, SI; or
a radio resource control, RRC, dedicated message.

5. The method of any one of claims 1 to 4, wherein a use granularity of the RA-prioritization for slicing comprises:
a single slice;
a slice group comprising at least two slices;
all slices;
a single slice group;
at least two slice groups; or
all slice groups.

6. The method of any one of claims 1 to 5, wherein the specific-type terminal device comprises: a multimedia priority service, MPS, terminal device, or a mission critical service, MCS, terminal device, and wherein the terminal device configured to perform the RA procedure is the specific-type terminal device.

7. The method of any one of claims 1 to 6, wherein performing the RA procedure by selecting the set of RA-prioritizations according to the first rule comprises:
performing the RA procedure by prioritizing use of the RA-prioritization for slicing.

8. The method of any one of claims 1 to 7, further comprising:
performing the RA procedure by using the RA-prioritization for slicing on condition that an indication received from a network device indicates the RA-prioritization for slicing.

9. The method of any one of claims 1 to 8, wherein the first rule is used to select the set of RA-prioritizations from the plurality of sets of RA-prioritizations.

10. The method of any one of claims 1 to 9, further comprising:
on condition that a first RA-prioritization for a first slice does not exist, performing the RA procedure by using the RA-prioritization for the specific-type terminal device, wherein the RA-prioritization for the specific-type terminal device and the first RA-prioritization for the first slice are both configured through first configuration information received from a network device; and
on condition that both the first RA-prioritization for the first slice and the RA-prioritization for the specific-type terminal device do not exist, performing the RA procedure by using a generic RA-prioritization.

11. An apparatus for random access, RA, comprising:
an RA performing module configured to perform an RA procedure by selecting a set of RA-prioritizations according to a first rule, on condition that the terminal device is configured with a plurality of sets of RA-prioritizations, wherein
the plurality of sets of RA-prioritizations comprise at least one of: an RA-prioritization for a specific-type terminal device, or an RA-prioritization for slicing.

12. The apparatus of claim 11, wherein
the apparatus further comprises a receiving module configured to receive an indication from a network device;
the RA performing module configured to perform the RA procedure by selecting the set of RA-prioritizations according to the first rule is configured to:
perform the RA procedure by using an RA-prioritization that is indicated by the indication in the plurality of sets of RA-prioritizations.

13. The apparatus of any one of claims 11 to 12, further comprising:
a receiving module configured to receive second configuration information, wherein the second configuration information is used to configure the plurality of sets of RA-prioritizations.

14. A terminal device, comprising:
a processor;
a transceiver coupled with the processor; and
a memory configured to store executable instructions for the processor, wherein the processor is configured to load and execute the executable instructions to cause the terminal device to implement the method for RA of any one of claims 1 to 10.

15. A computer-readable storage medium configured to store executable instructions which are loaded and executed by a terminal device to implement the method for RA of any one of claims 1 to 10.
